# EUROPEAN PATENT APPLICATION

(11) **EP 4 718 599 A1**
(43) Date of publication of application: **01.04.2026**
(21) Application number: 25774937.4
(22) Date of filing: 12.03.2025
(51) Int. Cl.: H01M 50/204, B21C 23/04, H01M 10/6556, B23K 9/00

(54) **EXTRUDED PACK HOUSING AND MANUFACTURING METHOD THEREOF**

(30) Priority: 21.03.2024 KR 20240038941
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); HUR, Nam Hoon, Daejeon 34122 (KR)
(74) Representative: Plasseraud IP
(86) International application number: PCT/KR2025/099666
(87) International publication number: WO 2025/198429

(57) **Abstract**

The present disclosure relates to a pack housing comprising a heat sink, a pair of side frames coupled to both side surfaces of the heat sink, and a front frame and a rear frame coupled to the front and rear of the heat sink respectively, wherein, in one example, the heat sink and the pair of side frames are integrally formed by extrusion molding, and accordingly, no separate bonding surface is formed between the heat sink and the pair of side frames.

## Description

### [Technical Field]

The present disclosure relates to a technology for manufacturing a pack housing constituting a battery pack by extrusion molding.

This application claims the benefit of priority from Korean Patent Application No. 10-2024-0038941, filed on March 21, 2024, the entire contents disclosed therein are incorporated by reference into this disclosure.

### [Background]

Unlike primary batteries, secondary batteries are rechargeable and have been extensively researched and developed recently due to their potential for miniaturization and large capacity. Due to the increasing technological development and demand for mobile devices, and the electric vehicles and energy storage systems that are emerging in line with the contemporary demand for environmental protection, the demand for secondary batteries as an energy source is increasing even more rapidly.

Secondary batteries are classified into coin-type batteries, cylindrical batteries, prismatic batteries, and pouch-type batteries according to the shape of the battery case. In secondary batteries, the electrode assembly mounted inside the battery case is a power generation element capable of charge and discharge, consisting of a stacked structure of electrodes and separators.

Since secondary batteries are required to be used continuously for a long period, it is necessary to effectively control the heat generated during the charge and discharge process. If the cooling of the secondary battery is not performed smoothly, the temperature rise causes an increase in current, and the increase in current again causes temperature rise, resulting in a positive feedback chain reaction that ultimately leads to a catastrophic state of thermal runaway.

To effectively dissipate the heat generated in secondary batteries, heat sinks (also called cooling plates) through which coolant flows are widely used. The heat sink is mounted on the bottom surface of a battery pack that carries a plurality of secondary battery groups, for example, a plurality of secondary batteries, and performs a cooling function by absorbing the heat generated inside the pack with coolant and releasing it to the outside.

Heat sinks can be divided into brazed heat sinks and extruded heat sinks according to their structure or manufacturing method. A brazed heat sink has a structure that forms a flow path by brazing two plates together, and although it has a high degree of freedom in flow path design, it has the disadvantage of being unfavorable for structural rigidity due to deterioration of material properties. In contrast, extruded heat sinks manufactured as a continuous body through extrusion molding are advantageous for structural rigidity, but only straight flow paths can be implemented, resulting in many ports and thus pipes for connection occupying space.

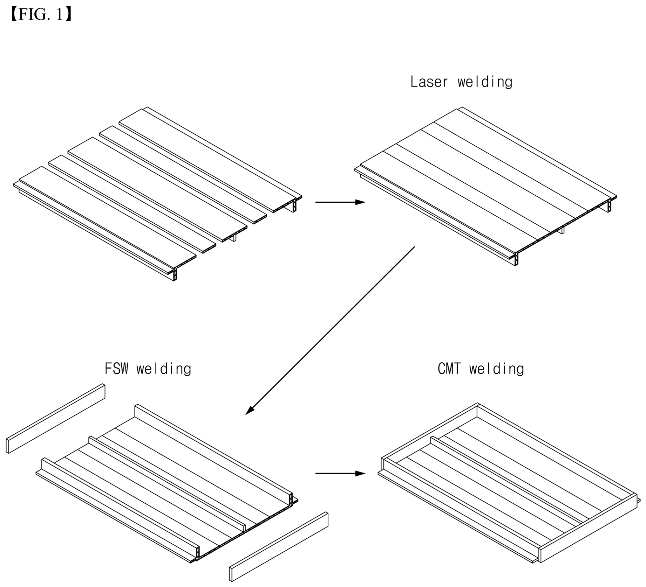

Extruded heat sinks are increasingly being applied due to their advantages of excellent structural rigidity and durability, but constructing a pack housing using extruded heat sinks requires several welding processes. That is, if each component of the pack housing including the heat sink is manufactured by extrusion process to constitute the pack housing, the size of the extruded components is affected by the mold, and the fabrication of the extruded housing involves a process of welding a plurality of components. For example, as exemplarily shown in Fig. 1, a multi-step welding process can be performed in which the outside of the bottom surface of the center frame including the heat sink and side frame is joined by laser welding, friction stir welding (FSW) is performed on the inside of the bottom surface, and the front and rear frames are joined by CMT (Cold Metal Transfer) welding.

When a plurality of welding operations is performed to manufacture the pack housing in this way, it takes a lot of time and cost to perform the welding process, and warping occurs during several welding processes, making it difficult to manage the dimensions of the pack housing.

### [Summary]

### [Technical Problem]

The present disclosure aims to provide a structure of a pack housing suitable for more efficiently manufacturing an extruded pack housing and a manufacturing method thereof.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a pack housing including a heat sink, a pair of side frames coupled to both side surfaces of the heat sink, and a front frame and a rear frame coupled to the front and rear of the heat sink respectively, wherein, in one example, the heat sink and the pair of side frames are integrally formed by extrusion molding, and accordingly, no separate bonding surface is formed between the heat sink and the pair of side frames.

The front frame and rear frame are joined to the heat sink by welding.

In one embodiment, the pack housing includes a center frame parallel to the pair of side frames in the central region of the heat sink, and the heat sink and center frame are integrally formed by extrusion molding, and accordingly, no separate bonding surface is formed between the heat sink and the center frame.

The heat sink includes a plurality of ribs spaced apart and formed inside thereof along a direction parallel to the pair of side frames, and hollow passages may be formed between the plurality of ribs.

Meanwhile, the present disclosure provides a manufacturing method of a pack housing, comprising: preparing a mold for integrally extrusion molding the heat sink of the pack housing and the side frames on both side surfaces of the heat sink; integrally extrusion manufacturing a pack housing semi-finished product excluding the front frame and rear frame using the mold; and combining separately manufactured front frame and rear frame to the pack housing semi-finished product by welding.

In one embodiment, the pack housing semi-finished product may integrally include a center frame disposed in the central region of the heat sink to be parallel to the side frames.

In addition, the mold can manufacture a pair of pack housing semi-finished products in a batch.

For example, the pair of pack housing semi-finished products may be batch molded in a mirror-symmetric form with respect to the center of the mold.

In addition, the mold can manufacture the pack housing semi-finished product, and the front frame and rear frame in a batch.

In one embodiment, the front frame and rear frame may be joined to the pack housing semi-finished product by CMT welding.

### [Advantageous Effects]

According to the pack housing of the present disclosure having the above structure, most of the pack housing, specifically the heat sink constituting the bottom plate and the pair of side frames, are configured as an integral type that does not form separate bonding surfaces through extrusion molding. Accordingly, the manufacturing process of the pack housing is simplified to improve productivity, and the difficulty of dimensional management due to warping phenomenon is also resolved as the welding process that was previously performed a plurality of times is omitted.

However, the technical effects that can be obtained through the present disclosure are not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating an example of a pack housing manufacturing process according to the prior art.
FIG. 2 is a drawing illustrating an example of a pack housing semi-finished product according to one embodiment of the present disclosure.
FIG. 3 is a drawing illustrating an example of combining front and rear frames to a pack housing semi-finished product.
FIG. 4 is a flowchart of a manufacturing method of a pack housing according to one embodiment of the present disclosure.
FIG. 5 is a drawing illustrating an example of a mold suitable for manufacturing a pack housing semi-finished product.
FIG. 6 is a drawing illustrating another example of a mold suitable for manufacturing a pack housing semi-finished product.
FIG. 7 is a drawing illustrating an example of a mold for batch manufacturing front and rear frames together with a pack housing semi-finished product.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a pack housing including a heat sink, a pair of side frames coupled to both side surfaces of the heat sink, and a front frame and a rear frame coupled to the front and rear of the heat sink, wherein, in one example, the heat sink and the pair of side frames are integrally formed by extrusion molding, and accordingly, no separate bonding surface is formed between the heat sink and the pair of side frames.

According to the pack housing of the present disclosure having the above structure, most of the pack housing, specifically the heat sink constituting the bottom plate and the pair of side frames, are configured as an integral type that does not form separate bonding surfaces through extrusion molding. Accordingly, the manufacturing process of the pack housing is simplified to improve productivity, and the difficulty of dimensional management due to warping phenomenon is also resolved as the welding process that was previously performed a plurality of times is omitted.

### [Detailed Description]

Hereinafter, specific embodiments of the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### (first embodiment)

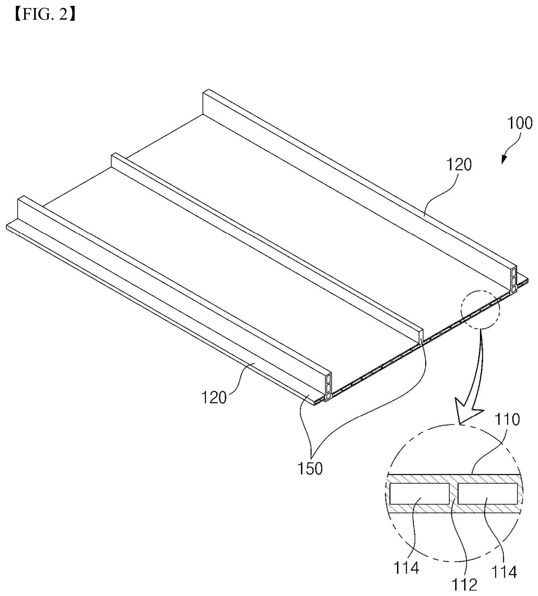

The present disclosure relates to a pack housing 10 including a heat sink 110, a pair of side frames 120 coupled to both side surfaces of the heat sink 110, and a front frame 130 and a rear frame 140 coupled to the front and rear of the heat sink 110. FIG. 2 is a drawing showing a pack housing semi-finished product 100, and in this specification, an integral structure including the heat sink 110 and a pair of side frames 120 coupled to both side surfaces thereof will be called a pack housing semi-finished product 100.

Referring to FIG. 2, the heat sink 110 and the pair of side frames 120 are integrally formed by extrusion molding. That is, the entire pack housing semi-finished product 100 is batch manufactured by extrusion molding, and accordingly, no separate bonding surface is formed between the heat sink 110 and the pair of side frames 120.

The pack housing 10 of the present disclosure, when divided by component standards, consists of the pack housing semi-finished product 100, the front frame 130, and the rear frame 140. Compared to the prior art of FIG. 1, the pack housing 10 of the present disclosure does not have welding work for connecting a plurality of heat sinks 110 and side frames 120 into one, and bonding surfaces accompanying welding. Therefore, the manufacturing process of the pack housing 10 is simplified to improve productivity. Also, since the welding process that was previously performed multiple times is omitted, the difficulty of dimensional management due to warping phenomenon by welding heat is also resolved. As dimensional management becomes easier, the possibility of dimensional defects is reduced, and therefore this also leads to improvement in productivity.

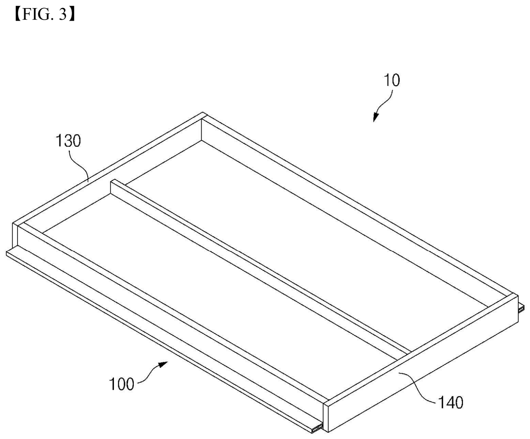

Due to the characteristics of extrusion molding, protrusion structures in parallel directions can be extrusion molded, but structures in directions deviating from this cannot be extrusion molded. That is, the heat sink 110 can be batch manufactured by extrusion molding together with the internal rib 112 structure and the side frames 120 in the direction parallel thereto. On the other hand, the front frame 130 and rear frame 140 in the direction orthogonal to the side frames 120 cannot be batch molded, so they are manufactured separately and then joined to the heat sink 110 by welding. FIG. 3 is a drawing showing an example of combining front and rear frames 130, 140 to the pack housing semi-finished product 100.

Here, a plurality of ribs 112 formed inside the heat sink 110 are spaced apart from each other by a predetermined distance, and hollow passages 114 are formed between the plurality of ribs 112. These hollow passages 114 can be used as cooling flow paths through which coolant flows.

Depending on the embodiment, the pack housing 10 may have a center frame in the central region of the heat sink 110. The center frame corresponds to a frame member that partitions between rows when battery cells not shown in the drawings are arranged in two rows. The direction of the center frame is parallel to the pair of side frames 120. Therefore, the center frame can also be batch manufactured by extrusion molding to constitute part of the pack housing semi-finished product 100. As described above, since the heat sink 110 and the center frame are integrally formed by extrusion molding, no separate bonding surface is formed between the heat sink 110 and the center frame either.

### (second embodiment)

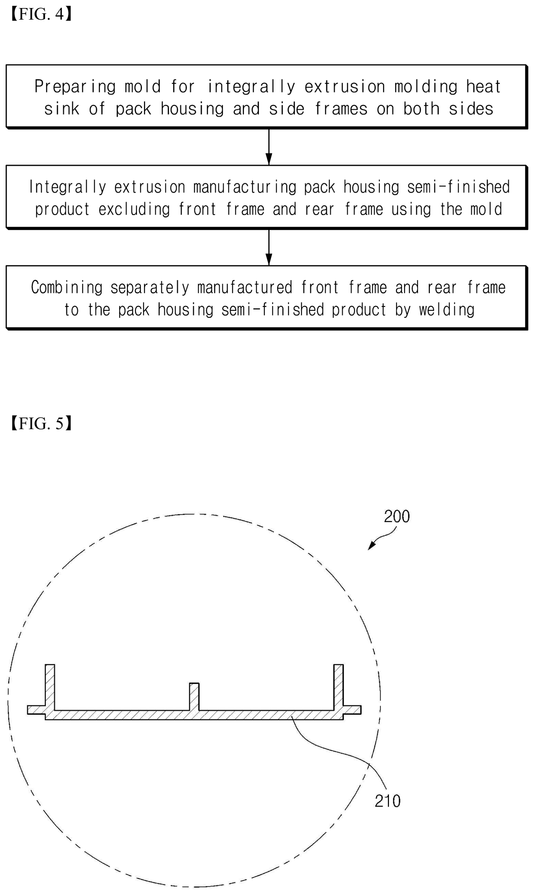

FIG. 4 is a flowchart of a manufacturing method of the pack housing 10 according to one embodiment of the present disclosure. With reference to FIG. 4, the manufacturing method of the pack housing 10 according to one embodiment of the present disclosure will be described.

First, among the entire structure of the pack housing 10, a mold 200 for integrally extrusion molding the heat sink 110 and the side frames 120 on both side surfaces is prepared. That is, the pack housing semi-finished product 100 is manufactured by the mold 200. The extrusion direction of the pack housing semi-finished product 100 is parallel to the extension direction of the side frames 120. Therefore, the mold 200 is provided with an injection port 210 corresponding to a cut cross-section of FIG. 2.

When the mold 200 is prepared, the pack housing semi-finished product 100 excluding the front frame 130 and rear frame 140 is integrally extrusion manufactured using the mold 200. The pack housing semi-finished product 100 can be manufactured from a metal material suitable for the pack housing 10, for example, aluminum material metal. The pack housing semi-finished product 100 is continuously manufactured by extrusion molding, and after extrusion molding, it is cut according to the designed length to prepare a plurality of pack housing semi-finished products 100.

When the pack housing semi-finished product 100 is prepared, separately manufactured front frame 130 and rear frame 140 are combined to the pack housing semi-finished product 100 by welding. By joining the front frame 130 and rear frame 140, the pack housing 10 as shown in FIG. 3 is made. In one embodiment, the front frame 130 and rear frame 140 may be joined to the pack housing semi-finished product 100 by CMT welding. CMT welding is a low heat input type welding that can minimize thermal deformation, and improves the dimensional quality of the pack housing 10 by minimizing warping that may occur during welding of the front frame 130 and rear frame 140. In addition, after welding of the front frame 130 and rear frame 140, machining on the pack housing 10, such as cutting processes like milling, drilling, grinding, etc., is performed to complete the pack housing 10.

FIG. 5 is a drawing showing an example of a mold 200 suitable for manufacturing a pack housing semi-finished product 100. In FIG. 5, the mold 200 is shown as having a circular cross-section, and is particularly exemplified as having an injection port 210 in a form where a center frame parallel to the side frames 120 is disposed in the central region of the heat sink 110.

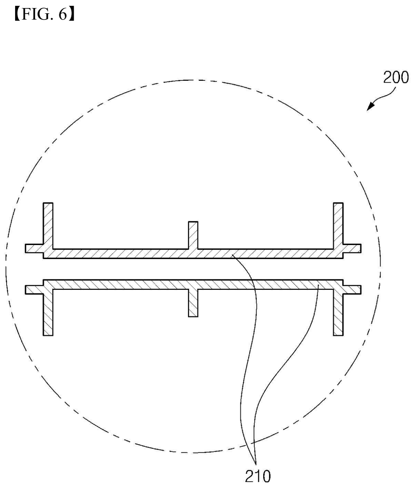

In addition, since the pack housing semi-finished product 100 including the side frames 120 has a considerably large size, the mold 200 can also be enlarged correspondingly. Manufacturing the pack housing semi-finished product 100 in a single line with such a large mold 200 may not be efficient. Considering this point, the mold 200 of FIG. 6 is provided with two injection ports 210 of the same shape to batch manufacture a pair of pack housing semi-finished products 100. For example, the pair of pack housing semi-finished products 100 may be batch molded in a mirror-symmetric form with respect to the center (diameter) of the mold 200. By the two injection ports 210 forming a mirror-symmetric form, it becomes easy to uniformly manage the quality of the pack housing semi-finished products 100 manufactured in two lines.

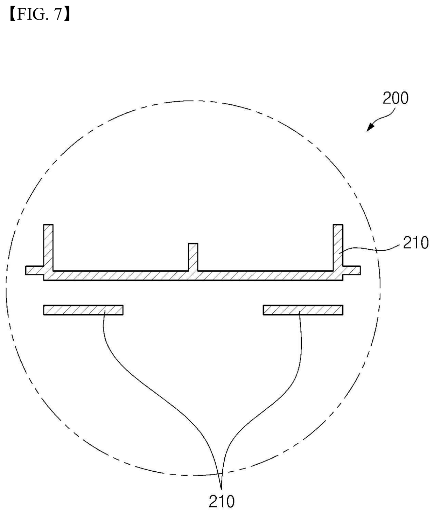

In addition, FIG. 7 shows another example of a mold 200 that can be applied to the present disclosure. According to the mold 200 of FIG. 7, front and rear frames 130, 140 can be batch manufactured together with the pack housing semi-finished product 100. That is, the mold 200 of FIG. 7 is provided with injection ports 210 corresponding to the cross-sectional shapes of the front and rear frames 130, 140 as well as the pack housing semi-finished product 100.

Accordingly, all components necessary for constituting the pack housing 10 with one mold 200, that is, the pack housing semi-finished product 100 and the front and rear frames 130, 140 can be batch manufactured. Since all components of the pack housing 10 are manufactured in one mold line, subsequent welding work of the front and rear frames 130, 140 can be efficiently performed.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that the disclosure covers various equivalents, modifications, and substitutions at the time of filing of this application.

### [Description of Reference Numerals]

10: pack housing
100: pack housing semi-finished product
110: heat sink
112: rib
114: hollow passage
120: side frame
130: front frame
140: rear frame
150: center frame
200: mold
210: injection port

## Claims

1. A pack housing comprising: a heat sink, a pair of side frames coupled to both side surfaces of the heat sink, and a front frame and a rear frame coupled to the front and rear of the heat sink respectively,
wherein the heat sink and the pair of side frames are integrally formed by extrusion molding, and accordingly, no separate bonding surface is formed between the heat sink and the pair of side frames.

2. The pack housing of claim 1,
wherein the front frame and rear frame are joined to the heat sink by welding.

3. The pack housing of claim 2,
wherein the pack housing includes a center frame parallel to the pair of side frames in the central region of the heat sink, and
the heat sink and center frame are integrally formed by extrusion molding, and accordingly, no separate bonding surface is formed between the heat sink and the center frame.

4. The pack housing of claim 1,
wherein the heat sink includes a plurality of ribs spaced apart and formed inside thereof along a direction parallel to the pair of side frames, and hollow passages are formed between the plurality of ribs.

5. A manufacturing method of a pack housing comprising:
preparing a mold for integrally extrusion molding a heat sink of the pack housing and side frames on both side surfaces of the heat sink;
integrally extrusion manufacturing a pack housing semi-finished product excluding front frame and rear frame using the mold; and
combining separately manufactured front frame and rear frame to the pack housing semi-finished product by welding.

6. The manufacturing method of the pack housing of claim 5,
wherein the pack housing semi-finished product integrally includes a center frame disposed in the central region of the heat sink to be parallel to the side frames.

7. The manufacturing method of the pack housing of claim 5,
wherein the mold batch manufactures a pair of pack housing semi-finished products.

8. The manufacturing method of the pack housing of claim 7,
wherein the pair of pack housing semi-finished products are batch molded in a mirror-symmetric form with respect to the center of the mold.

9. The manufacturing method of the pack housing of claim 5,
wherein the mold batch manufactures the pack housing semi-finished product, and the front frame and rear frame.

10. The manufacturing method of the pack housing of claim 5,
wherein the front frame and rear frame are joined to the pack housing semi-finished product by Cold Metal Transfer (CMT) welding.
